# EUROPEAN PATENT SPECIFICATION

(11) **EP 1 958 740 B1**
(45) Date of publication and mention of the grant of the patent: **31.10.2012**
(21) Application number: 08250461.4
(22) Date of filing: 07.02.2008
(51) Int. Cl.: B26D 7/01

(54) **Gripping food products in slicing machines**
Festhalten von Nahrungsmitteln in Schneidemaschinen
Préhension de produits alimentaires sur des trancheuses

(30) Priority: 15.02.2007 GB 0702949
(43) Date of publication of application: 20.08.2008
(73) Proprietor: AEW Delford Systems Limited, Norwich NR7 9BB (GB)
(72) Inventor: Culling, Alan, Norwich Norfolk NR12 8AY (GB)
(74) Representative: Sharrock, Daniel John

(56) References cited:
- GB-A- 370 660
- US-A- 1 412 244

## Description

This invention relates to apparatus for and a method of gripping food products (such as bacon, cheese or cooked meat) in a slicing machine.

### Background to the Invention

A known gripper apparatus for use in a food slicing machine comprises a plurality of hooks or teeth which are movable together between an inoperative retracted position and an extended operative position in which the hooks or teeth penetrate and thereby grip the trailing end of a food product, the forward or leading end of which is urged into contact with a slicing blade which slices the product, ready for packaging.

GB 370,660 discloses a gripping device having a first set of hooks or spikes and a second set of larger hooks or spikes. Means are provided to retract the larger hooks as a rotary knife approaches the gripping device during the latter part of a cutting operation.

DE 44 13 568 relates to a gripping unit having four pairs of circumferentially spaced hooks. The hooks of two opposed pairs are parallel to a first plane and the hooks of the other two opposed pairs are parallel to a second plane which is orthogonal to the first plane.

### Summary of theInvention

The invention is directed at gripper apparatus comprising hooks for gripping one end of a food product in a food slicing machine which slices the other end of the food product, the apparatus comprising a first set of hooks movable between a retracted inoperative position and an extended product-gripping position, and a second set of hooks movable between a retracted inoperative position and an extended product-gripping position, the second set of hooks when in their extended position projecting for a distance greater than the first set of hooks when in their extended position and the sets of hooks being independently movable, enabling both sets of hooks to occupy their respective extended positions during an initial stage of slicing and the second set of hooks to be withdrawn to their retracted position during a final stage of slicing so that more of the remaining end of the product can be sliced, wherein the first and second sets are curved and occupy parallel planes when in their extended position.

According to the invention, the planes occupied by the first set of hooks are orthogonal to the planes occupied by the second set of hooks, and the hooks of the second set are movable outwardly towards opposite sides of the apparatus as they move into their extended product-gripping positions.

At the commencement of slicing, the food product is bulky and heavy and requires a firm and robust grip, particularly (as is frequently the case) the machine has an inclined bed on which the food product is supported with its upper trailing end gripped by the gripper apparatus. By contrast, at the end of the slicing operation, the food product is greatly diminished in size and weight, negating the need for such a robust grip whilst there remains the desirability of being able to slice the product as far as possible before the slicing blade fouls the hooks or teeth. The invention aims to reconcile these conflicting factors.

When the two sets of hooks are in their respective extended positions, they provide a firm grip, minimising the risk of a product with a "soft" end breaking away and falling into the slicing machine and being lost as a consequence. Also, it may in some circumstances be desirable to retract the product slightly, which again requires a firm grip.

The hooks of the first set are preferably interconnected by a first linkage attached to a first pneumatically operated actuator, and the hooks of the second set are also preferably interconnected by a second linkage attached to a second pneumatically operated actuator.

In a preferred embodiment the planes occupied by the first set of hooks are vertical, but the hooks can be of any desired shape and can occupy any desired plane or move in the same or opposite directions. The configuration of the hooks will depend on the nature of the food product. The preferred embodiment is suitable for products such as bacon which have a relatively small vertical dimension.

In the preferred embodiment there are six hooks in the first set and four hooks in the second set, with the hooks of the first set projecting for a distance between 8 and 12mm (preferably 10mm) and the hooks of the second set projecting for a distance between 28 and 32mm (preferably 30mm).

The invention includes within its scope a slicing machine having a gripper assembly according to the invention and having an inclined surface or bed on which the food product is supported, with the upper end of the product being gripped by the gripper apparatus according to the invention.

The invention is also directed at a method of gripping a food product by means of first and second sets of curved hooks during slicing of the product in a slicing machine, the method comprising: engaging one end of the product with both sets of hooks during an initial stage of slicing by moving the hooks into extended positions in which they occupy parallel planes, with the second set of hooks penetrating more deeply into the product than the first set of hooks; and moving the second set of hooks to a retracted withdrawn position during a final stage of slicing so that more of the remaining end of the product can be sliced. According to the invention, during the product engaging step, the hooks move into extended positions with the planes occupied by the first set of hooks orthogonal to the planes occupied by the second set of hooks, and the hooks of the second set move outwardly towards opposite sides of the apparatus.

### Brief Description of the Drawings

Gripper apparatus according to the invention will now be described by way of example, with the reference to the accompanying drawings, in which
Figure 1 is an isometric view of the gripper apparatus with two sets of hooks retracted,
Figure 2 is a view corresponding to Figure 1 but with the two sets of hooks extended, and Figures 3 to 6 are plan views illustrating the gripper apparatus at four moments in an operative cycle of the gripper apparatus.

### Detailed Description of the Drawings

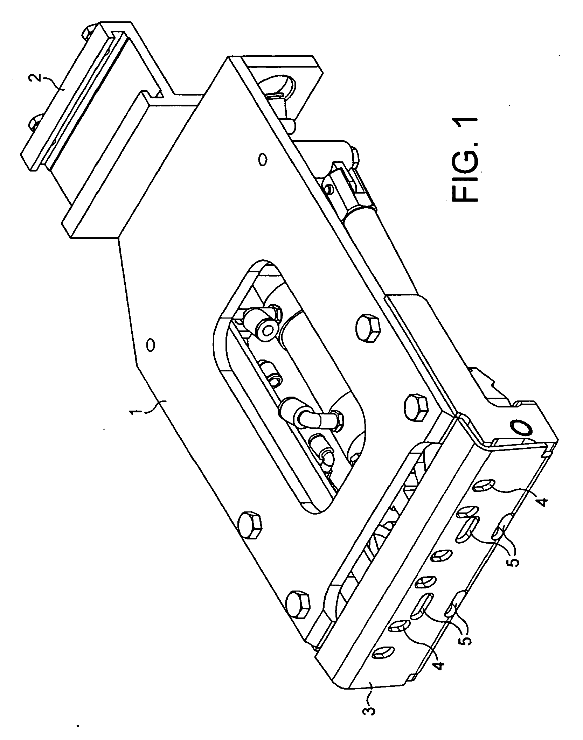

The gripper apparatus has a base plate 1 to the rear of which is attached a channel member 2 for mounting the apparatus in a bacon slicing machine and to the front of which is pivotally mounted a sensor plate 3. The sensor plate 3 has a series of six horizontally aligned and horizontally spaced holes 4 and two pairs of slots 5, the two slots 5 of each pair being vertically spaced and the two pairs being horizontally spaced as best seen in Figure 1.

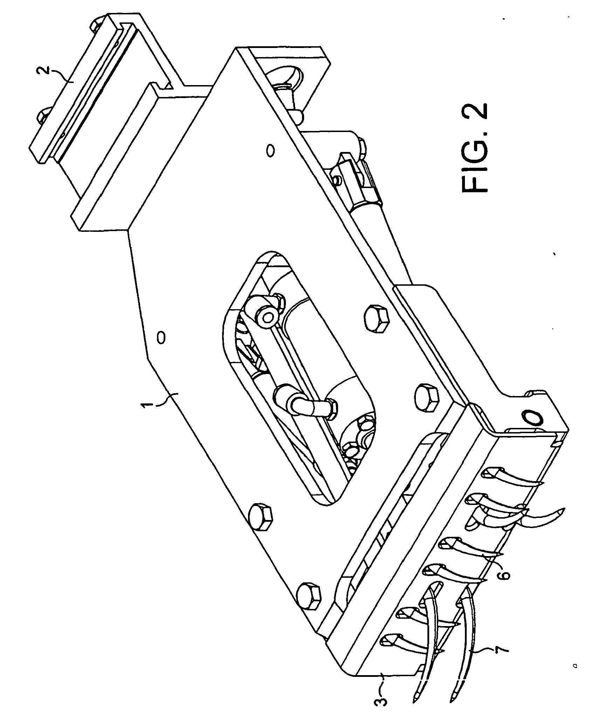

The gripper apparatus has a first set of six hooks 6 movable between an inoperative retracted position (Figure 1) and an operative extended position (Figure 2) in which the six hooks 6 project forwardly through the six holes 4 respectively. The gripper apparatus also has a second set of four hooks 7 movable between an inoperative retracted position (Figure 1) and an operative extended position (Figure 2) in which the four hooks 7 project forwardly through the four slots 5.

The six hooks 6 are interconnected by a first linkage which is attached to a first pneumatic actuator. The first actuator operates to move all six hooks 6 between the retracted and extended positions. Similarly, the four hooks 7 are interconnected by a second linkage which is attached to a second pneumatic actuator. The second actuator operates independently of the first actuator and is thereby capable of moving the four hooks 7 between their retracted and extended positions, independently of any movement imparted to the first hooks 6.

It can be seen from Figure 2 that the six hooks 6 move downwardly and forwardly of the plate 3 when moving to their extended positions and that the four hooks 7 move horizontally, one pair moving outwardly towards one side of the apparatus and the other pair moving outwardly towards the other side of the apparatus. In their extended positions, the six hooks 6 occupy horizontally spaced vertical planes and the four hooks 7 occupy spaced planes (horizontal when the plate 3 is horizontal) orthogonal to the planes occupied by the hooks 6.

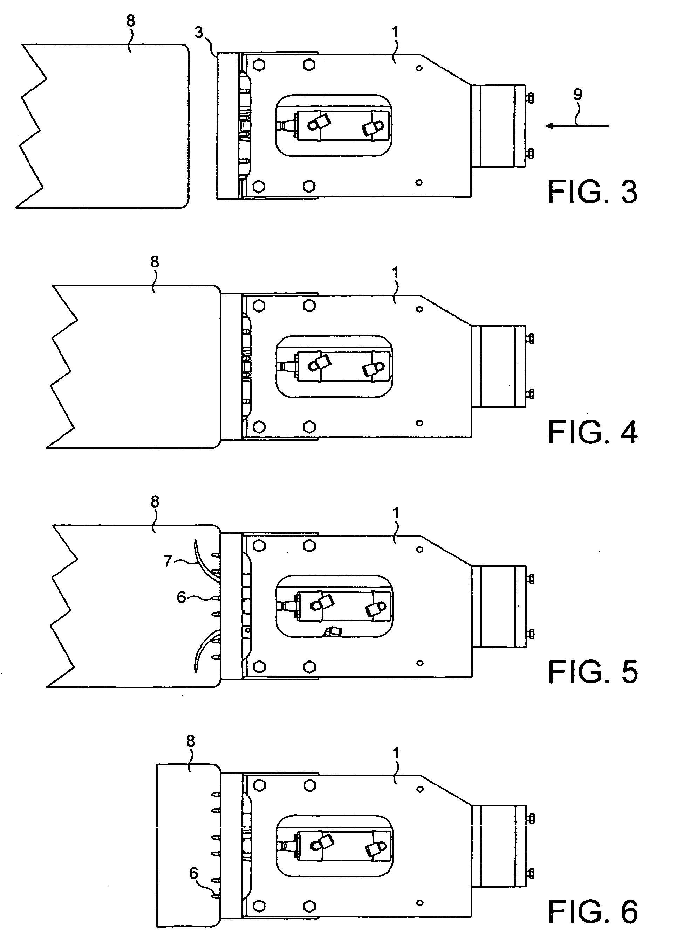

Figures 3 to 6 illustrate the gripper apparatus being used to grip a log 8 of food product, such as bacon. Figure 3 shows the apparatus being moved in the direction of the arrow 9, towards the log 8, with both sets of hooks in their respective retracted positions behind the sensor plate 3. When the apparatus contacts the trailing end of the log (Figure 4) this engagement displaces the sensor plate 3 which pivots through a small angle. A sensor detects this pivoting movement and causes both pneumatic actuators to be energised, resulting in both sets of hooks 6, 7 being moved to their extended positions. When this happens, both sets of hooks 6, 7 penetrate the trailing end of the log 8, the four hooks 7 penetrating more deeply into the log than the hooks 6. For example, the hooks 7 may penetrate 30mm into the product and the hooks 6 10mm. With both sets of hooks 6, 7 engaged, the log 8 is firmly gripped at its trailing end and its forward end is pushed by the gripper apparatus into contact with a spinning slicing blade (not shown). As slicing proceeds, the gripper apparatus moves towards the left, pushing the log 8 towards the slicing blade.

In many forms of bacon slicer, the log to be sliced is supported in an inclined position, with the leading end of the log lower than the trailing end so the firm grip of the two sets of hooks 6, 7 counteracts any tendency for the log 8 to become detached from the gripper apparatus. In some circumstances the log may be retracted slightly, so a firm grip provided by the engagement of the two sets of hooks enables this to be achieved.

As slicing proceeds, the length and weight of the log are reduced (Figure 6). When the remaining length of log is small, and at a predetermined point in the length of travel of the gripper apparatus, the second actuator causes the four hooks 7 to move to their retracted positions, leaving the six hooks 6 in their extended positions. As a result, more of the length of the log can be sliced in this final stage of slicing, without the slicing blade fouling any hooks, minimising the length of the butt end of the log which represents wastage. The hooks 6 are then retracted from the butt end of the log.

In the example, an additional 4mm of food product can be sliced from every food product, in comparison with known machines.

After being sliced, the bacon slices emerge onto a conveyor for packaging and the gripper apparatus undertakes a return stroke (towards the right as viewed in Figures 3 to 6) ready to engage the next product to be sliced.

## Claims

1. Gripper apparatus comprising hooks (6, 7) for gripping one end of a food product (8) in a food slicing machine which slices the other end of the food product, the apparatus comprising a first set of hooks (6) movable between a retracted inoperative position and an extended product-gripping position, and a second set of hooks (7) movable between a retracted inoperative position and an extended product-gripping position, the second set of hooks when in their extended position projecting for a distance greater than the first set of hooks when in their extended position to penetrate more deeply into the product, and the sets of hooks being independently movable, enabling both sets of hooks to occupy their respective extended positions during an initial stage of slicing and the second set of hooks to be withdrawn to their retracted position during a final stage of slicing so that more of the remaining end of the product can be sliced, wherein the first and second sets of hooks are curved and occupy parallel planes when in their extended position,
**characterised in that**
the planes occupied by the first set of hooks (6) are orthogonal to the planes occupied by the second set of hooks (7), and the hooks (7) of the second set are movable outwardly towards opposite sides of the apparatus as they move into their extended product-gripping positions.

2. Gripper apparatus according to claim 1, wherein one pair of hooks in the second set (7) is movable outwardly towards one side of the apparatus and another pair of hooks in the second set (7) is movable outwardly towards the other side of the apparatus as they move into their extended positions.

3. Gripper apparatus according to claim 1 or claim 2, wherein the hooks (6) of the first set are interconnected by a first linkage attached to a first pneumatically operated actuator, and the hooks (7) of the second set are interconnected by a second linkage attached to a second pneumatically operated actuator.

4. Gripper apparatus according to any of the preceding claims, wherein the planes occupied by the first set (6) are vertical.

5. Gripper apparatus according to any of the preceding claims, wherein there are six hooks (6) in the first set and four hooks (7) in the second set.

6. Gripper apparatus according to any of the preceding claims, wherein the first hooks (6) project for a distance between 8 and 12mm, preferably 10mm.

7. Gripper apparatus according to any of the preceding claims, wherein the second hooks (7) project for a distance between 28 and 32mm, preferably 30mm.

8. Gripper apparatus according to any of the preceding claims, wherein the apparatus has a sensor plate (3) which senses initial engagement of the apparatus with the trailing end of the food product (8) to cause both sets of hooks (6, 7) to move from their respective retracted positions to their respective extended positions.

9. Gripper apparatus according to any of the preceding claims and in combination with a slicing machine having an inclined bed or surface on which the food product (8) is supported, with the upper end of the product being gripped by the gripper apparatus.

10. A method of gripping a food product (8) by means of first and second sets of curved hooks (6, 7) during slicing of the product in a slicing machine, the method comprising: engaging one end of the product with both sets of hooks (6, 7) during an initial stage of slicing by moving the hooks into extended positions in which they occupy parallel planes, with the second set of hooks (7) penetrating more deeply into the product than the first set of hooks (6); and moving the second set of hooks (7) to a retracted withdrawn position during a final stage of slicing so that more of the remaining end of the product can be sliced,
**characterised in that**
during the product engaging step, the hooks (6, 7) move into extended positions with the planes occupied by the first set of hooks (6) orthogonal to the planes occupied by the second set of hooks (7), and the hooks (7) of the second set move outwardly towards opposite sides of the apparatus.

11. A method according to claim 10, wherein one pair of hooks in the second set (7) moves outwardly towards one side of the apparatus and another pair of hooks in the second set (7) moves outwardly towards the other side of the apparatus as they move into their extended positions.

12. A method according to claim 10 or claim 11, wherein the second set of hooks (7) are moved to their retracted position at a predetermined point in the length of travel of gripper apparatus which carries the first set of hooks (6) and the second set of hooks (7).

## Patentansprüche

1. Greifervorrichtung mit Haken (6, 7) zum Greifen eines Endes eines Nahrungsmittelprodukts (8) in einer Nahrungsmittelaufschneidemaschine, mit der das andere Ende des Nahrungsmittelprodukts aufgeschnitten wird, wobei die Vorrichtung einen ersten Satz Haken (6), der zwischen einer zurückgezogenen Außerbetriebsposition und einer ausgefahrenen Produktgreifposition bewegt werden kann, und einen zweiten Satz Haken (7) umfasst, der zwischen einer zurückgezogenen Außerbetriebsposition und einer ausgefahrenen Produktgreifposition bewegt werden kann, wobei der zweite Satz Haken in seiner ausgefahrenen Position weiter vorragt als der erste Satz Haken in seiner ausgefahrenen Position, um tiefer in das Produkt einzudringen, und wobei die Sätze Haken unabhängig beweglich sind, wodurch beide Sätze Haken in der Lage sind, ihre jeweiligen ausgefahrenen Positionen während eines Anfangsstadiums des Aufschneidens einzunehmen, und der zweite Satz Haken während eines Endstadiums des Aufschneidens in seine zurückgezogene Position zurückgezogen werden kann, so dass mehr des verbleibenden Endes des Produkts aufgeschnitten werden kann, wobei der erste und der zweite Satz Haken gebogen sind und in ihrer ausgefahrenen Position parallele Ebenen einnehmen,
**dadurch gekennzeichnet, dass**
die vom ersten Satz Haken (6) eingenommenen Ebenen orthogonal zu den vom zweiten Satz Haken (7) eingenommenen Ebenen verlaufen und die Haken (7) des zweiten Satzes nach außen zu gegenüberliegenden Seiten der Vorrichtung bewegt werden können, wenn sie sich in ihre ausgefahrenen Produktgreifpositionen bewegen.

2. Greifervorrichtung nach Anspruch 1, wobei ein Paar Haken im zweiten Satz (7) nach außen zu einer Seite der Vorrichtung bewegt werden kann und ein anderes Paar Haken im zweiten Satz (7) nach außen zur anderen Seite der Vorrichtung bewegt werden kann, wenn sie sich in ihre ausgefahrenen Positionen bewegen.

3. Greifervorrichtung nach Anspruch 1 oder 2, wobei die Haken (6) des ersten Satzes über ein erstes an einem ersten pneumatisch betätigten Stellglied angebrachtes Gestänge miteinander verbunden sind und die Haken (7) des zweiten Satzes über ein zweites an einem zweiten pneumatisch betätigten Stellglied angebrachtes Gestänge miteinander verbunden sind.

4. Greifervorrichtung nach einem der vorhergehenden Ansprüche, wobei die vom ersten Satz (6) eingenommenen Ebenen vertikal sind.

5. Greifervorrichtung nach einem der vorhergehenden Ansprüche, wobei der erste Satz sechs Haken (6) und der zweite Satz vier Haken (7) aufweist.

6. Greifervorrichtung nach einem der vorhergehenden Ansprüche, wobei die ersten Haken (6) um einen Abstand von zwischen 8 und 12 mm, vorzugsweise von 10 mm vorragen.

7. Greifervorrichtung nach einem der vorhergehenden Ansprüche, wobei die zweiten Haken (7) um einen Abstand von zwischen 28 und 32 mm, vorzugsweise von 30 mm vorragen.

8. Greifervorrichtung nach einem der vorhergehenden Ansprüche, wobei die Vorrichtung eine Sensorplatte (3) hat, die die anfängliche Ineingriffnahme der Vorrichtung mit dem hinteren Ende des Nahrungsmittelprodukts (8) erfasst, um zu veranlassen, dass sich beide Sätze Haken (6, 7) aus ihren jeweiligen zurückgezogenen Positionen in ihre jeweiligen ausgefahrenen Positionen bewegen.

9. Greifervorrichtung nach einem der vorhergehenden Ansprüche und in Kombination mit einer Aufschneidemaschine mit einem geneigten Bett oder einer geneigten Fläche, auf dem bzw. der das Nahrungsmittelprodukt (8) gestützt ist, wobei das obere Ende des Produkts von der Greifervorrichtung ergriffen wird.

10. Verfahren zum Greifen eines Nahrungsmittelprodukts (8) mittels eines ersten und eines zweiten Satzes gebogener Haken (6, 7) während des Aufschneidens des Produkts in einer Aufschneidemaschine, wobei das Verfahren die folgenden Schritte umfasst: Ineingriffnehmen eines Endes des Produkts mit beiden Sätzen Haken (6, 7) während eines Anfangsstadiums des Aufschneidens, indem die Haken in ausgefahrene Positionen bewegt werden, in denen sie parallele Ebenen einnehmen, wobei der zweite Satz Haken (7) tiefer in das Produkt eindringt als der erste Satz Haken (6), und Bewegen des zweiten Satzes Haken (7) in eine zurückgezogene eingezogene Position während eines Endstadiums des Aufschneidens, so dass mehr des verbleibenden Endes des Produkts aufgeschnitten werden kann,
**dadurch gekennzeichnet, dass**
sich die Haken (6, 7) während des Produktineingriffnahmeschritts in ausgefahrene Positionen bewegen, wobei die vom ersten Satz Haken (6) eingenommenen Ebenen orthogonal zu den vom zweiten Satz Haken (7) eingenommenen Ebenen verlaufen und sich die Haken (7) des zweiten Satzes nach außen zu gegenüberliegenden Seiten der Vorrichtung bewegen.

11. Verfahren nach Anspruch 10, wobei sich ein Paar Haken im zweiten Satz (7) nach außen zu einer Seite der Vorrichtung bewegt und sich ein anderes Paar Haken im zweiten Satz (7) nach außen zu der anderen Seite der Vorrichtung bewegt, wenn sie sich in ihre ausgefahrenen Positionen bewegen.

12. Verfahren nach Anspruch 10 oder 11, wobei der zweite Satz Haken (7) an einer vorbestimmten Stelle auf der Länge des Weges der Greifervorrichtung, die den ersten Satz Haken (6) und den zweiten Satz Haken (7) trägt, in seine zurückgezogene Position bewegt wird.

## Revendications

1. Appareil de préhension comprenant des crochets (6, 7) pour saisir une extrémité d'un produit alimentaire (8) dans une trancheuse qui tranche l'autre extrémité du produit alimentaire, l'appareil comprenant un premier jeu de crochets (6) déplaçables entre une position rentrée non fonctionnelle et une position sortie de préhension de produit, et un deuxième jeu de crochets (7) déplaçables entre une position rentrée non fonctionnelle et une position sortie de préhension de produit, le deuxième jeu de crochets faisant saillie, dans leur position sortie, sur une distance supérieure à celle du premier jeu de crochets dans leur position sortie afin de pénétrer plus profondément à l'intérieur du produit, et les jeux de crochets étant déplaçables indépendamment, permettant aux deux jeux de crochets d'occuper leurs positions sorties respectives lors d'une phase initiale de tranchage et au deuxième jeu de crochets d'être rétracté jusqu'à leur position rentrée lors d'une phase finale de tranchage, de sorte qu'une plus grande partie de l'extrémité restante du produit puisse être tranchée, les premier et deuxième jeux de crochets étant incurvés et occupant des plans parallèles lorsqu'ils sont dans leur position sortie,
**caractérisé en ce que**
les plans occupés par le premier jeu de crochets (6) sont orthogonaux aux plans occupés par le deuxième jeu de crochets (7), et les crochets (7) du deuxième jeu sont déplaçables vers l'extérieur en direction de côtés opposés de l'appareil lorsqu'ils se déplacent jusqu'à leurs positions sorties de préhension de produit.

2. Appareil de préhension selon la revendication 1, dans lequel une paire de crochets du deuxième jeu (7) est déplaçable vers l'extérieur en direction d'un côté de l'appareil et une autre paire de crochets du deuxième jeu (7) est déplaçable vers l'extérieur en direction de l'autre côté de l'appareil lorsqu'ils se déplacent jusqu'à leurs positions sorties.

3. Appareil de préhension selon la revendication 1 ou la revendication 2, dans lequel les crochets (6) du premier jeu sont interconnectés par une première tringlerie fixée à un premier actionneur actionné pneumatiquement, et les crochets (7) du deuxième jeu sont interconnectés par une deuxième tringlerie fixée à un deuxième actionneur actionné pneumatiquement.

4. Appareil de préhension selon l'une quelconque des revendications précédentes, dans lequel les plans occupés par le premier jeu (6) sont verticaux.

5. Appareil de préhension selon l'une quelconque des revendications précédentes, dans lequel il y a six crochets (6) dans le premier jeu et quatre crochets (7) dans le deuxième jeu.

6. Appareil de préhension selon l'une quelconque des revendications précédentes, dans lequel les premiers crochets (6) font saillie sur une distance d'entre 8 et 12mm, de préférence de 10mm.

7. Appareil de préhension selon l'une quelconque des revendications précédentes, dans lequel les deuxièmes crochets (7) font saillie sur une distance d'entre 28 et 32mm, de préférence de 30mm.

8. Appareil de préhension selon l'une quelconque des revendications précédentes, dans lequel l'appareil possède une plaque de détection (3) qui détecte l'engagement initial de l'appareil avec l'extrémité arrière du produit alimentaire (8) pour amener les deux jeux de crochets (6, 7) à se déplacer à partir de leurs positions rentrées respectives jusqu'à leurs positions sorties respectives.

9. Appareil de préhension selon l'une quelconque des revendications précédentes et en combinaison avec une trancheuse ayant un lit ou une surface incliné(e) sur lequel/laquelle le produit alimentaire (8) est supporté, l'extrémité supérieure du produit étant saisie par l'appareil de préhension.

10. Procédé de préhension d'un produit alimentaire (8) au moyen de premier et deuxième jeux de crochets incurvés (6, 7) lors du tranchage du produit dans une trancheuse, le procédé comprenant les étapes suivantes : engager une extrémité du produit à l'aide des deux jeux de crochets (6, 7) lors d'une phase initiale de tranchage en déplaçant les crochets jusqu'à des positions sorties dans lesquelles ils occupent des plans parallèles, le deuxième jeu de crochets (7) pénétrant plus profondément à l'intérieur du produit que le premier jeu de crochets (6) ; et déplacer le deuxième jeu de crochets (7) jusqu'à une position rétractée rentrée lors d'une phase finale de tranchage, de sorte qu'une plus grande partie de l'extrémité restante du produit puisse être tranchée,
**caractérisé en ce que**
lors de l'étape d'engagement avec le produit, les crochets (6, 7) se déplacent jusqu'à des positions sorties, les plans occupés par le premier jeu de crochets (6) étant orthogonaux aux plans occupés par le deuxième jeu de crochets (7), et les crochets (7) du deuxième jeu se déplacent vers l'extérieur en direction de côtés opposés de l'appareil.

11. Procédé selon la revendication 10, dans lequel une paire de crochets du deuxième jeu (7) se déplace vers l'extérieur en direction d'un côté de l'appareil et une autre paire de crochets du deuxième jeu (7) se déplace vers l'extérieur en direction de l'autre côté de l'appareil lorsqu'ils se déplacent jusqu'à leurs positions sorties.

12. Procédé selon la revendication 10 ou la revendication 11, dans lequel le deuxième jeu de crochets (7) est déplacé jusqu'à leur position rentrée à un point prédéterminé dans la longueur de course de l'appareil de préhension qui porte le premier jeu de crochets (6) et le deuxième jeu de crochets (7).
